# EUROPÄISCHE PATENTSCHRIFT

(11) **EP 3 994 380 B1**
(45) Veröffentlichungstag und Bekanntmachung des Hinweises auf die Patenterteilung: **28.08.2024**
(21) Anmeldenummer: 20740229.8
(22) Anmeldetag: 03.07.2020
(51) Int. Cl.: F16K 27/02, F16K 31/06

(54) **MAGNETVENTIL**
SOLENOID VALVE
ÉLECTROVANNE

(30) Priorität: 04.07.2019 DE 102019004597
(43) Veröffentlichungstag der Anmeldung: 11.05.2022
(73) Patentinhaber: Aventics GmbH, 30880 Laatzen (DE)
(72) Erfinder: KOCH, Jens, 30451 Hannover (DE); MAY, Konstantin, 31137 Hildesheim (DE)
(74) Vertreter: Spahn, Tobias
(86) Internationale Anmeldenummer: PCT/DE2020/100592
(87) Internationale Veröffentlichungsnummer: WO 2021/001000

(56) Entgegenhaltungen:
- US-A- 4 240 468
- US-A- 5 710 475
- US-A- 6 073 904

## Beschreibung

### Technisches Gebiet

Die Erfindung betrifft ein Magnetventil.

### Stand der Technik

Im Stand der Technik bekannte Magnetventile weisen eine Spule mit einem innerhalb der Spule axialbeweglich gegen eine Federbelastung gelagerten Ankermittel, ein die Spule umgreifendes Metalljoch und ein die Anordnung umgebendes Gehäuse auf. Das Gehäuse dient der elektrischen Isolierung und dem Schutz der Magnetanordnung vor äußeren Einwirkungen und ist hierzu aus einem elektrisch nicht-leitfähigen Material, beispielsweise einem Kunststoff, gebildet. Derartige im Stand der Technik bekannte Magnetventile finden beispielsweise als elektrische betätigte Vorstufen für pneumatische Wegeventile Anwendung ("Pilot-Magnetventil"), wobei das Ankermittel beispielsweise mit Dichtmitteln für einen korrespondierenden Dichtsitz für ein gasförmiges oder flüssiges Fluid ausgebildet ist oder auf ein separates Stellelement mit einem Dichtmittel einwirkt, mit dem es körperlich oder funktional verbunden ist.

Es bestehen Marktanforderungen, solche Magnetventile möglichst kleinbauend mit einem gleichzeitig möglichst hohen Durchfluss auszubilden. Hierbei besteht ein Zielkonflikt zwischen benötigten relativ hohen Schalt- und Schließkräften einerseits und den hieraus resultierenden relativ hohen Temperaturen andererseits, die sich aufgrund der geforderten Schalt- und Schließkräfte infolge des Wärmeeintrags durch die hierfür erforderliche elektrische Leistung in der Spulenwicklung bei einer verhältnismäßig kleinen Bauform betriebsbedingt ergeben. Die maximal installierbare elektrische Leistung ist durch die maximal zulässige Temperatur begrenzt, die sich beim Betrieb im Gleichgewichtszustand zwischen dem Wärmeeintrag aufgrund der elektrischen Leistung und der Wärmeableitung über die Spulenoberfläche und Gehäuseoberfläche des Magnetventils an die umgebende Atmosphäre einstellt. Aus den genannten Gründen ist eine möglichst effektive Wärmeableitung über die Oberfläche des elektrisch isolierenden Gehäuses des Magnetventils an die umgebende Atmosphäre wünschenswert.

Aus der DE 1 797 854 U ist ein Gehäuse für der Betätigung von Ventilen dienende Elektromagneten, bestehend aus einer Spule und einem diese umgebenden Blechpaket bekannt, welches aus einem Gießharz (Duroplast) gefertigt und auf seiner Außenseite mit Kühlrippen versehen ist, um die wärmeabführende Oberfläche wesentlich zu vergrößern. Zur Verbesserung der Wärmeableitung wird ferner vorgeschlagen, dem Gießharz wärmeleitende Füllstoffe beizugeben. Die Herstellung eines Ventilgehäuses mit einem Harz in einem Gussprozess ist verhältnismäßig zeitaufwendig. Typische Gießharze weisen nach Ihrer Aushärtung ferner eine relativ spröde Materialbeschaffenheit auf, wodurch diese aufgrund des bestimmungsgemäßen Wärmeeintrags einer verhältnismäßig starken Materialalterung unterliegen. Die adhäsive Verbindung des Gießharzes an den ebenen Grenzflächen zu dem die Spule umgebenden Blechpaket kann hierbei zudem aufgrund der unterschiedlichen Wärmeausdehnungskoeffizienten der beiden Materialien zur spannungsbedingten Rissbildungen im Gießharzkörper führen.

Aus der DE 33 22 844 A1 ist ein Gehäuse für ein mit einem Ventilkörper ausgerüsteten Solenoid-Ventil in Patronenbauweise bekannt, das aus einem Spritzguss-Formteil aus Kunstharz besteht, welches die Ventilkonstruktion einschließt und das auf seiner Außenseite mit einer rippenähnlichen Struktur ausgeführt sein kann. Hierbei ist eine Solenoid-Spule in einem Spulenkörper getragen, der in einem rohrförmigen Rahmen befestigt ist, welcher in einem aus einem geeigneten Kunstharz gebildeten Außenkörper eingekapselt ist. Herkömmliche Kunstharze weisen eine nur begrenzte Wärmeleitfähigkeit auf, wodurch die erreichbare Wärmeableitung über die Oberfläche des Kunstharzgehäuses entsprechend begrenzt ist. Ferner ist die Spritzguss-Verbindung des Kunstharzgehäuses mit dem rohrförmigen Rahmen des Spulenkörpers an den ebenen Grenzflächen üblicherweise auch adhäsiv, wodurch aufgrund der unterschiedlichen Wärmeausdehnungskoeffizienten des Kunstharzes und des Rahmens spannungsbedingte Rissbildungen im Kunstharzkörper entstehen können.

Aus der EP 0 615 088 B1 ist eine Ventileinrichtung mit einem elektrisch betätigbaren - als Vorsteuerventil dienenden - Magnetventil bekannt, das ein Ventilgehäuse aufweist, in dem eine Magnetspule angeordnet ist, und das eine der Umgebung zugewandte Außenfläche besitzt, an der zumindest im Bereich der Magnetspule mehrere durch Zwischenräume voneinander getrennte Kühlrippen vorgesehen sind, wobei die zwischen den Kühlrippen vorgesehenen Zwischenräume endseitig offen sind. Die Kühlrippen dienen der Vergrößerung der für die Luftströmung zur Verfügung stehenden Luftspalte und damit zu einer verbesserten Wärmeabfuhr durch Konvektion. Der mit Kühlrippen ausgestaltete Gehäuseabschnitt kann als Kunststoffteil ausgeführt sein. Herkömmliche Kunststoffe weisen eine nur begrenzte Wärmeleitfähigkeit auf, wodurch die erreichbare Wärmeableitung über die Oberfläche des Kunststoffgehäuses entsprechend begrenzt ist. Technische Wege zur Herstellung oder Verbindung des Kunststoffteils des Ventilgehäuses mit der Magnetspule sind von der EP 0 615 088 B1 nicht offenbart.

Weitere für den Gegenstand von Anspruch 1 relevante Dokumente sind US 6 073 904 A, US 5 710 475 A und US 4 240 468 A.

### Offenbarung der Erfindung

Der Erfindung liegt die Aufgabe zu Grunde, die dargestellten Nachteile zu vermeiden. Insbesondere soll ein Magnetventil bereitgestellt werden, welches eine effektive Wärmeableitung an die umgebende Atmosphäre aufweist und welches die Realisierung verhältnismäßig kleinbauender Magnetventile mit gleichzeitig verhältnismäßig hohen Schalt- und Schließkräften ermöglicht.

Die Aufgabe wird erfindungsgemäß gelöst durch ein Magnetventil nach Anspruch 1. Vorteilhafte Weiterbildungen der Erfindung sind in den Unteransprüchen angegeben.

Der Kern der Erfindung bildet ein Magnetventil, welches einen aus einem thermoplastischen Kunststoff gebildeten Gehäusekörper, einer Spule und ein die Spule zumindest teilweise umgreifendes Metalljoch umfasst, wobei der Gehäusekörper als ein die Spule umschließendes Spritzgussteil ausgeführt ist, dem thermoplastischen Kunststoff elektrisch isolierende Additive zur Verbesserung seiner thermischen Leitfähigkeit beigegeben sind und der Gehäusekörper auf seiner Außenseite mit Rippen ausgebildet ist und wobei das Metalljoch als ein den Gehäusekörper teilweise umgreifendes Bauteil ausgeführt und mit diesem mechanisch verbunden ist. Mit dem aus einem thermoplastischen Kunststoffkörper gebildeten Gehäusekörper ist durch die Beigabe von Additiven mit einer erhöhten thermischen Leitfähigkeit und die gleichzeitige Ausbildung von die Oberfläche zur Wärmeableitung an die umgebende Atmosphäre vergrößernden Rippen auf der Außenseite des Gehäusekörpers eine effektive Wärmeableitung gewährleistet. Als Additive sind jegliche zur Verarbeitung mit Kunststoff geeigneten Stoffe verwendbar, die eine mit Kunststoffen vergleichbare, nur äußerst geringe elektrische Leitfähigkeit (Isolator) besitzen, gleichzeitig jedoch eine gegenüber dem jeweils verwendeten Kunststoff deutlich erhöhte thermische Leitfähigkeit aufweisen. Dies ermöglicht die Realisierung verhältnismäßig kleinbauender Magnetventile mit einer gleichzeitig relativ hohen elektrischen Leistung, wodurch wiederrum verhältnismäßig hohe Schalt- und Schließkräfte realisierbar sind. Durch die Ausgestaltung des Gehäusekörpers als Spritzgussteil ist das Magnetventil konstruktiv einfach und kostengünstig herstellbar. Indem das Metalljoch nicht unmittelbar die Spule umgreift, sondern als ein den Gehäusekörper von außen teilweise umgreifendes Bauteil ausgeführt ist, welches mit dem Gehäusekörper lediglich mechanisch verbunden ist, werden gleichzeitig spannungsbedingte Risse im Gehäusekörper aufgrund unterschiedlicher Wärmeausdehnungskoeffizienten der beiden Komponenten vermieden. Denn das Metalljoch weist an seinen ebenen Grenzflächen keine adhäsive Verbindung zu dem Kunststoff-Gehäusekörper auf. Aufgrund der rein mechanischen Verbindung zwischen dem außen angeordneten Metalljoch und dem unmittelbar die Spule umschließenden Gehäusekörper sind minimale wärmebedingte Relativbewegungen zwischen dem Metalljoch und den Gehäusekörper ermöglicht. An den Grenzflächen zwischen dem Kunststoff-Gehäusekörper und der Spule sind hingegen keine vergleichbaren Spannungsmomente gegeben, weil die Spule auf ihrer von der Spulenwicklung gebildeten Außenseite keine vergleichbaren ebenen Grenzflächen zu dem ihm umschließenden Spritzgussteil aufweist. Durch die Erfindung wird ein Magnetventil mit einer erhöhten installierbaren Leistung bei gleichbleibender räumlicher Dimensionierung bereitgestellt.

Ein besonders gute Wärmeleitung zwischen der Spule und dem Gehäusekörper ist gewährleistet, indem der Gehäusekörper als ein einteiliges Bauteil unmittelbar an die Spule angeformt ist. Dies ermöglicht gleichzeitig eine einfache und kostengünstige Herstellung.

In einer vorteilhaften Ausgestaltung umgreift das Metalljoch den Gehäusekörper U-förmig oder als längsgeschnittener, teilweiser Hohlzylinder.

Zur konstruktiv einfachen und kostengünstig herstellbaren Ausführung der mechanischen Verbindung ist das Metalljoch mit mindestens einer zwischen den Gehäusekörper umgreifenden Flanken oder Schenkeln gebildeten Schraubverbindung mit diesem mechanisch verbunden.

Als besonders einfach verarbeitbare Additive sind mineralische und/oder anorganische Feststoffe verwendbar. Im Markt besonders kostengünstig verfügbare Feststoff-Additive mit guten Eigenschaften sind Bornitrit und/oder Aluminiumoxid.

Spulen für Magnetventile sind in der Regel aus einem inneren Trägerelement und einer äußeren Spulenwicklung, beispielsweise aus Kupfer, gebildet. Indem hierbei auch das Trägerelement aus einem Kunststoff mit durch elektrisch isolierende Additive erhöhten thermischen Leitfähigkeit gebildet ist, ist gleichzeitig eine zusätzlich verbesserte Wärmeableitung über das Trägerelement gewährleistet.

Indem zwischen dem Gehäusekörper und dem ihn teilweise umgreifenden Metalljoch ein oder mehrere Elastomer-Elemente angeordnet sind, wird eine zusätzlich verbesserte Bewegungsfreiheit zwischen Gehäusekörper und Metalljoch erreicht und mögliche Spannungen im Betrieb weiter reduziert.

Weitere Vorteile der Erfindung sind nachstehend gemeinsam mit der Beschreibung eines bevorzugten Ausführungsbeispiels der Erfindung anhand der Figuren näher dargestellt. Es zeigen:
- Fig. 1: eine perspektivische Frontansicht eines Magnetventils.
- Fig. 2: eine weitere perspektivische Darstellung des Magnetventils gemäß Fig. 1.
- Fig. 3: eine schematische Längsschnittdarstellung des Magnetventils gemäß der Fig. 1.

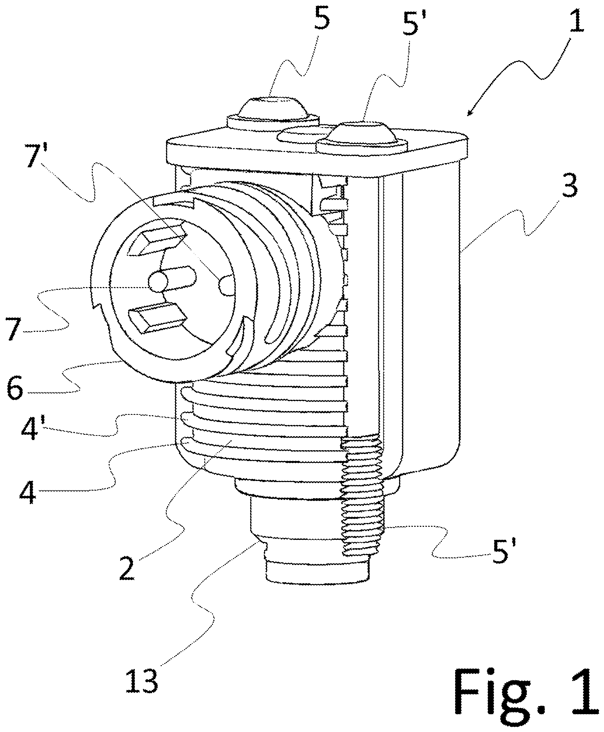

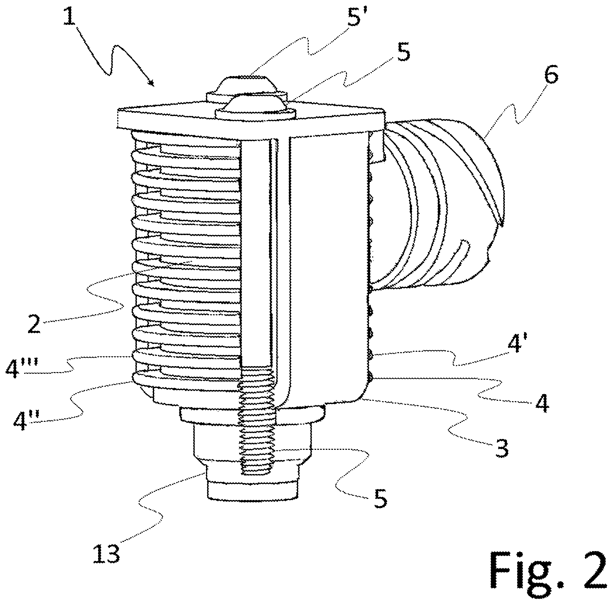

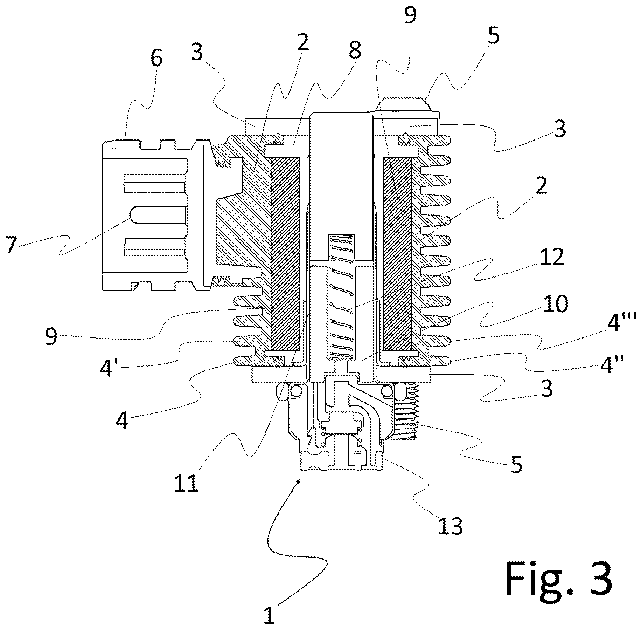

Die Fig. 1 und die Fig. 2 zeigen das Magnetventil 1 in einer perspektivischen Front- und Rückansicht. Das Magnetventil 1 weist einen aus einem thermoplastischen Kunststoff gebildeten Gehäusekörper 2 und ein den Gehäusekörper 2 teilweise umgreifendes Metalljoch 3 auf. Der Gehäusekörper 2 ist auf seiner Außenseite mit einer die Oberfläche zur konvektiven Wärmeableitung an die umgebende Atmosphäre vergrößernden Rippenstruktur ausgebildet, von denen in den Fig. 1 bis Fig. 3 zur Beibehaltung der Übersichtlichkeit lediglich die einzelnen Rippen 4, 4', 4" und 4‴ exemplarisch mit Bezugszeichen versehen sind. Das Metalljoch 3 ist mit dem Gehäusekörper 2 kraftschlüssig durch die Schrauben 5 und 5' verbunden. Der Gehäusekörper 2 ist an seiner Frontseite mit dem hohlzylindrischen Anschlusssockel 6 ausgebildet, in dem elektrische Kontaktstifte 7 und 7' angeordnet sind. Der Anschlusssockel 6 dient der Aufnahme eines mit diesem korrespondierenden Steckverbindungsmittels zur Herstellung einer elektrischen Verbindung der Spule mit einer Stromversorgung. Die Fig. 3 zeigt einen schematischen Längsschnitt durch das Magnetventil 1. Auf dem Spulenträger 8 ist die Spulenwicklung 9 getragen. Innerhalb einer zentralen zylindrischen Aussparung des Spulenträgers 8 ist der rohrförmige Magnetanker 10 innerhalb der Führungshülse 11 axialbeweglich geführt. Bei der elektrischen Betätigung der Spule bewegt sich der Magnetanker 10 entgegen der Kraft der Feder 12 nach oben, wodurch im pneumatischen Ventilteil 13 eine Fluidverbindung freigebbar ist. Der Gehäusekörper 2 ist aus einem thermoplastischen Kunststoff gebildet und als ein die Spule unmittelbar umschließendes Spritzgussteil ausgeführt. Zur Herstellung des Gehäusekörpers 2 wird die Spule direkt mit dem thermoplastischen Kunststoff umspritzt und der Gehäusekörper 2 mithin unmittelbar einteilig an die Spule angeformt. Auf diese Herstellungsweise ist eine besonders gute Wärmeleitung zwischen der Spule und dem Gehäusekörper 2 gewährleistet, da zwischen dem thermoplastischen Material des Gehäusekörpers 2 ein optimaler Formschluss ohne Spalte hergestellt wird. Dem thermoplastischen Kunststoff sind hierbei zur Verbesserung seiner thermischen Leitfähigkeit elektrisch isolierende Additive mit einer gleichzeitig gegenüber dem Kunststoff deutlich erhöhten thermischen Leitfähigkeit beigegeben, was die Ableitung der Wärme aus der Spulenwicklung 9 über den Gehäusekörper 2 an die an die umgebende Atmosphäre verbessert. Indem das Metalljoch 3 den aus Kunststoff gebildeten Gehäusekörper 2 von außen umgreift und mit diesem lediglich mechanisch kraftschlüssig verbunden ist, sind bei Temperaturänderungen Relativbewegungen zwischen dem Metalljoch 3 und dem Gehäusekörper 2 ermöglicht, wodurch mechanische Beschädigungen des Gehäusekörpers vermieden werden. Das Magnetventil 1 ermöglicht gegenüber den im Stand der Technik bekannten Konstruktionen die Installation einer relativ höheren Leistung bei gleicher Baugröße.

### Bezugszeichenliste

- 1: Magnetventil
- 2: Gehäusekörper
- 3: Metalljoch
- 4, 4', 4", 4‴: Rippe
- 5, 5': Schraube
- 6: Anschlusssockel
- 7, 7': Kontaktstift
- 8: Spulenträger
- 9: Spulenwicklung
- 10: Magnetanker
- 11: Führungshülse
- 12: Feder
- 13: Ventilteil

## Patentansprüche

1. Magnetventil (1), umfassend einen aus einem thermoplastischen Kunststoff gebildeten Gehäusekörper (2), eine Spule und ein zumindest teilweise um die Spule angeordnetes Metalljoch (3), wobei das Metalljoch (3) als ein den Gehäusekörper (2) teilweise umgreifendes Bauteil ausgeführt und mit diesem mechanisch verbunden ist, und wobei der Gehäusekörper (2) als ein die Spule umschließendes Spritzgussteil ausgeführt ist, **dadurch gekennzeichnet, dass** dem thermoplastischen Kunststoff elektrisch isolierende Additive zur Erhöhung seiner thermischen Leitfähigkeit beigegeben sind und der Gehäusekörper (2) auf seiner Außenseite mit Rippen ausgebildet ist.

2. Magnetventil (1) nach Anspruch 1, **dadurch gekennzeichnet, dass** der Gehäusekörper (2) als ein einteiliges Bauteil unmittelbar an die Spule angeformt ist.

3. Magnetventil : (1) nach Anspruch 1 oder 2, **dadurch gekennzeichnet, dass** das Metalljoch (3) den Gehäusekörper (2) U-förmig oder als längsgeschnittener, teilweiser Hohlzylinder umgreift.

4. Magnetventil (1) nach einem der Ansprüche 1 bis 3, **dadurch gekennzeichnet, dass** das Metalljoch (3) mit mindestens einer zwischen den Gehäusekörper (2) umgreifenden Flanken oder Schenkeln gebildeten Schraubverbindung mit diesem mechanisch verbunden ist.

5. Magnetventil (1) nach einem Ansprüche 1 bis 4, **dadurch gekennzeichnet, dass** das die Additive mineralische und/oder anorganische Feststoffe sind.

6. Magnetventil (1) nach Anspruch 5, **dadurch gekennzeichnet, dass** die Additive Bornitrit und/oder Aluminiumoxid sind.

7. Magnetventil (1) nach einem der Ansprüche 1 bis 6, **dadurch gekennzeichnet, dass** die Spule ein inneres Trägerelement (8) und eine äußere Spulenwicklung (9) umfasst, wobei das Trägerelement (8) aus einem Kunststoff mit durch elektrisch isolierende Additive erhöhten thermischen Leitfähigkeit gebildet ist.

8. Magnetventil (1) nach einem der Ansprüche 1 bis 7, **dadurch gekennzeichnet, dass** zwischen dem Gehäusekörper (2) und dem ihn teilweise umgreifenden Metalljoch (3) ein oder mehrere Elastomer-Elemente angeordnet sind.

## Claims

1. Solenoid valve (1), comprising a housing body (2) formed from a thermoplastic material, a coil, and a metal yoke (3) arranged at least partially around the coil, wherein the metal yoke (3) is designed as a component partially surrounding the housing body (2) and is mechanically connected thereto, and wherein the housing body (2) is designed as an injection-molded part which encloses the coil, **characterized in that** electrically insulating additives are added to the thermoplastic material to increase its thermal conductivity and the housing body (2) is formed with ribs on its outer side.

2. Solenoid valve (1) according to claim 1, **characterized in that** the housing body (2) is integrally formed as a one-piece component directly on the coil.

3. Solenoid valve (1) according to either claim 1 or 2, **characterized in that** the metal yoke (3) surrounds the housing body (2) in a U-shape or as a longitudinally cut, partial hollow cylinder.

4. Solenoid valve (1) according to any of claims 1 to 3, **characterized in that** the metal yoke (3) is mechanically connected to the housing body by at least one screw connection formed between flanks or legs surrounding the housing body (2).

5. Solenoid valve (1) according to any of claims 1 to 4,
**characterized in that** the additives are mineral and/or inorganic solids.

6. Solenoid valve (1) according to claim 5, **characterized in that** the additives are boron nitrite and/or aluminum oxide.

7. Solenoid valve (1) according to any of claims 1 to 6,
**characterized in that** the coil comprises an inner support element (8) and an outer coil winding (9), wherein the support element (8) is formed from a plastics material having thermal conductivity increased by electrically insulating additives.

8. Solenoid valve (1) according to any of claims 1 to 7,
**characterized in that** one or more elastomer elements are arranged between the housing body (2) and the metal yoke (3) which partially surrounds it.

## Revendications

1. Électrovanne (1), comprenant un corps formant boîtier (2) formé d'une matière plastique thermoplastique, une bobine et une culasse métallique (3) disposée au moins partiellement autour de la bobine, dans laquelle la culasse métallique (3) est conçue sous la forme d'un composant entourant partiellement le corps formant boîtier (2) et est reliée mécaniquement à celui-ci, et dans laquelle le corps formant boîtier (2) est conçu sous la forme d'une pièce moulée par injection enveloppant la bobine, **caractérisée en ce que** des additifs électriquement isolants sont ajoutés à la matière plastique thermoplastique pour augmenter sa conductivité thermique et le corps formant boîtier (2) est réalisé avec des nervures sur sa face extérieure.

2. Électrovanne (1) selon la revendication 1, **caractérisée en ce que** le corps formant boîtier (2) est moulé directement sur la bobine sous la forme d'un composant monobloc.

3. Électrovanne (1) selon la revendication 1 ou 2, **caractérisée en ce que** la culasse métallique (3) entoure le corps formant boîtier (2) sous la forme d'un U ou en tant que cylindre partiellement creux découpé longitudinalement.

4. Électrovanne (1) selon l'une des revendications 1 à 3,
**caractérisée en ce que** la culasse métallique (3) est reliée mécaniquement au corps formant boîtier au moyen d'au moins une liaison par vis formée entre des flancs ou des branches entourant ledit corps formant boîtier (2).

5. Électrovanne (1) selon l'une des revendications 1 à 4,
**caractérisée en ce que** les additifs sont des matières solides minérales et/ou inorganiques.

6. Électrovanne (1) selon la revendication 5, **caractérisée en ce que** les additifs sont du nitrure de bore et/ou de l'oxyde d'aluminium.

7. Électrovanne (1) selon l'une des revendications 1 à 6,
**caractérisée en ce que** la bobine comprend un élément de support (8) interne et un enroulement de bobine externe (9), dans laquelle l'élément de support (8) est formé d'une matière plastique comportant une conductivité thermique augmentée par des additifs électriquement isolants.

8. Électrovanne (1) selon l'une des revendications 1 à 7, **caractérisée en ce qu'**un ou plusieurs éléments élastomères sont disposés entre le corps formant boîtier (2) et la culasse métallique (3) qui l'entoure partiellement.
